# EUROPÄISCHE PATENTSCHRIFT

(11) **EP 1 109 642 B1**
(45) Veröffentlichungstag und Bekanntmachung des Hinweises auf die Patenterteilung: **17.11.2004**
(21) Anmeldenummer: 99941517.7
(22) Anmeldetag: 04.08.1999
(51) Int. Cl.: B23B 31/02

(54) **SPANNFUTTER, INSBESONDERE DEHNSPANNFUTTER**
CLAMPING CHUCK, NOTABLY EXPANSION CHUCK
MANDRIN DE SERRAGE, NOTAMMENT MANDRIN EXPANSIBLE

(30) Priorität: 14.08.1998 DE 19836912
(43) Veröffentlichungstag der Anmeldung: 27.06.2001
(73) Patentinhaber: Schunk GmbH & Co. KG Fabrik für Spann- und Greifwerkzeuge, 74348 Lauffen (DE)
(72) Erfinder: HAAG, Michael, D-74232 Abstatt (DE); CLAUSS, Herbert, D-74348 Lauffen (DE)
(74) Vertreter: Paul, Dieter-Alfred, Dipl.-Ing.
(86) Internationale Anmeldenummer: PCT/EP1999/005654
(87) Internationale Veröffentlichungsnummer: WO 2000/009281

(56) Entgegenhaltungen:
- DE-A- 3 838 451
- DE-A- 4 214 479
- DE-A- 4 427 051
- DE-U- 9 301 918
- DE-U- 29 704 440

## Beschreibung

Die vorliegende Erfindung betrifft ein Spannfutter, insbesondere Dehnspannfutter, mit einem formsteifen Futterkörper, in dem eine zentrale Aufnahme für den Schaft eines zu spannenden Werkstücks oder Werkzeugs ausgebildet ist, und einem Spannmechanismus, um einen in die Aufnahme eingeschobenen Schaft in der Aufnahme zu fixieren, wobei zur axialen Positionierung des Schaftes in der Aufnahme ein Anschlagstück vorgesehen ist, das mittels einer. Stelleinrichtung axial verstellt werden kann, wobei die Stelleinrichtung als Schneckentrieb mit einer quer zur Aufnahme im Futterkörper drehbar gelagerten Schnecke und einem koaxial zur Aufnahme angeordneten Schneckenrad ausgebildet ist und das Anschlagstück derart mit dem Schnekkenrad gekoppelt und in dem Futterkörper gehalten ist, daß eine Drehbewegung des Schneckenrades in eine Axialbewegung des Anschlagstücks umgesetzt wird.

Spannfutter dieser Art sind in unterschiedlichen Ausführungsformen bekannt und werden in erster Linie eingesetzt, um einen Werkzeugschaft, z. B. einen Bohrer- oder Fräserschaft, oder aber auch Werkstücke in der Arbeitsspindel einer entsprechenden Werkzeugmaschine zu fixieren. Zur axialen Positionierung des Schafts in der Aufnahme des Futterkörpers weisen die bekannten Spannfutter üblicherweise einen Axialanschlag auf, der von der Maschinenseite her in die Aufnahme hineinragt und mittels einer Stelleinrichtung axial bewegt werden kann.

Aus der DE-AS 19 04 536 ist beispielsweise ein Spannfutter bekannt, bei dem der Axialanschlag mit einem Außentrapezgewinde versehen ist, das mit einem Trapezgewinde einer axial festgelegten Stellmutter in Eingriff steht. Zur Sicherung des Axialanschlags gegen Verdrehung dient ein Stift, der in eine Längsnut des Axialanschlags eingreift.

Aus der WO90/10517 ist weiterhin ein Spannfutter bekannt, bei dem als axialer Anschlag für das zu spannende Werkzeug oder Werkstück ein axial verschieblicher, zentrisch angeordneter und verdrehgesicherter Stellzapfen dient, der für die axiale Verstellung von einem drehbetätigten Stellantrieb beaufschlagt wird. Der Stellzapfen ist hierzu mit einer axialen Stangenverzahnung entsprechend einer Zahnstange versehen, die mit dem als Stirnrad ausgebildet und tangential zum Stellzapfen angestellten Stellantrieb kämmt. Zur Arretierung des justierten Stellzapfens ist ein mit dem Anschlagstück versehener Gewindestift vorgesehen.

Neben diesen Spannfuttern, bei denen die Betätigung der axialen Verstelleinrichtungen in radialer Richtung von der Seite her erfolgt, ist aus dem DE-U 93 01 918.1 ein Spannfutter bekannt, bei dem der Stellantrieb als Kegel ausgebildet ist, der schräg zur Längsache des Axialanschlags angestellt und an seinem Kegelmantel mit einem Spiralgewinde versehen ist, das mit einem Außengewinde an dem Axialanschlag in Eingriff steht.

Die bekannten Stelleinrichtungen haben sich in der Praxis zwar bewährt, jedoch besteht häufig der Wunsch, die axiale Positionierung des Anschlagstücks noch genauer und feiner vornehmen zu können.

In der DE 38 38 451 wird hierzu ein Spannfutter vorgeschlagen, bei dem als Axialanschlag für einen zu spannenden Schaft eines Werkzeugs ein Anschlagbolzen vorgesehen ist, der mit einem Gewindeende in den Futterkörper eingeschraubt ist und einen als Schneckenrad ausgebildeten Mittelteil besitzt, der mit der Schnecke eines Stellbolzens, welcher quer zur Schaftaufnahme in dem Futterkörper gehalten ist, kämmt. Beim Verdrehen des Stellbolzens um seine Längsachse führt der Anschlagbolzen in Abhängigkeit von dem Übersetzungsverhältnis zwischen der Schnecke des Stellbolzens und dem Schneckenrad des Anschlagbolzens eine Teildrehung aus, die wiederum in Abhängigkeit von der Gewindesteigung der Schraubverbindung zwischen dem Gewindeende des Anschlagbolzens und dem Futterkörper eine Axialverschiebung des Axialbolzens ergibt.

Durch diese Stelleinrichtung ist zwar eine genaue Justierung des Anschlagbolzens möglich. Bei großen Verstellwegen besteht allerdings der Nachteil, daß auch der Schnekkenradabschnitt des Anschlagbolzens entsprechend lang ausgebildet sein muß, da sich der Schneckenradabschnitt zusammen mit dem Anschlagbolzen axial bewegt.

Aufgabe der vorliegenden Erfindung ist es daher, ein Spannfutter der eingangs genannten Art so auszubilden, daß der Stellantrieb und damit das Futter eine kompakte Baugröße besitzen.

Diese Aufgabe ist erfindungsgemäß dadurch gelöst, daß das Anschlagstück das Schneckenrad durchgreift und in diesem drehfest aber axial verschiebbar gehalten ist, und das Anschlagstück ein Außengewinde aufweist, das mit einem Innengewinde einer im Futterkörper gehaltenen Führungsbuchse in Eingriff steht. Durch diese Ausbildung wird erreicht, daß das Schneckenrad selbst keine Axialbewegung auszuführen braucht, also schmal ausgebildet sein kann. Der erfindungsgemäße Stellantrieb kann daher kompakt ausgebildet sein und benötigt nur eine geringe Anzahl von Bauteilen.

Hinsichtlich weiterer Ausgestaltungen der Erfindung wird auf die Unteransprüche sowie die nachfolgende Beschreibung eines Ausführungsbeispiels unter Bezugnahme auf die beiliegende Zeichnung verwiesen. In der Zeichnung zeigt
- Figur 1: eine Ausführungsform eines Spannfutters gemäß der vorliegenden Erfindung in geschnittener Seitenansicht und
- Figur 2: das Spannfutter aus Figur 1 im Schnitt entlang der Linie IV-IV.

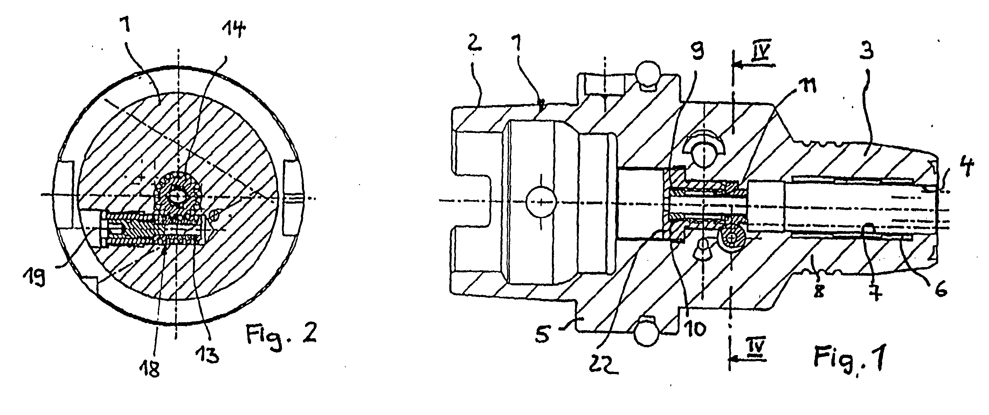

In den Figuren 1 und 2 ist ein Spannfutter gemäß der vorliegenden Erfindung dargestellt, das als Dehnspannfutter ausgebildet ist. Das Spannfutter umfaßt einen Futterkörper 1 aus einem formsteifen Material, der an seinem einen Endbereich in an sich bekannter weise einen Befestigungskonus 2 zur Einspannung in einer nicht dargestellten Aufnahmevorrichtung einer drehangetriebenen Arbeitsspindel einer Werkzeugmaschine aufweist. An dem anderen Ende des Futterkörpers 1 ist ein Anschlußschaft 3 mit einer zentralen Aufnahmebohrung 4 vorgesehen, in die der hier zylindrische Schaft beispielsweise eines Bohrwerkzeugs eingeschoben werden kann, und zwischen dem Befestigungskonus. 2 und dem Anschlußschaft 3 liegt ein Mittelteil 5 vergrößerten Durchmessers.

zur Fixierung des Schafts in der Aufnahmebohrung 4 ist im Anschlußschaft 3 des Futterkörpers 1 ein Dehnspannmechanismus dargestellt, von dem in der Zeichnung lediglich eine schmale Ringkammer 6 dargestellt ist, welche um die Aufnahmebohrung 4 herum angeordnet und koaxial zu dieser ausgerichtet ist. Die Ringkammer 6, deren axiale Länge etwa dem erforderlichen Spannbereich entspricht, wird zur Aufnahmebohrung 4 hin von einer relativ schmalen Innenwand 7 und radial nach außen von einer Außenwand 9, deren Wandstärke um ein Mehrfaches größer als die Wandstärke der Innenwand 8 ist, begrenzt. Die Ringkammer 6 ist mit einem Hydraulikmittel wie beispielsweise Öl gefüllt und steht in nicht dargestellter Weise über einen im Futtekörper 1 ausgebildeten Kanal mit einer Hydraulikmittelquelle in Verbindung, durch die sie zum Spannen eines Bauteils mit Druck beaufschlagt werden kann. Die Druckmittelquelle kann in an sich bekannter Weise von einem im Futterkörper 1 ausgebildeten Zylinderraum gebildet sein, der endseitig durch ein kolbenartiges Stellorgan verschlossen ist, das zur Erhöhung des Drucks in den Zylinderraum eingeschraubt bzw. zur Verringerung des Drucks aus dieser herausgeschraubt werden kann. Dieser hydraulische Druck wird über den Kanal zur Ringkammer 6 übertragen und bewirkt eine elastische Auswölbung der Innenwand 7, bis diese einen in die Aufnahmebohrung 4 eingesetzten Schaft fest umschließt, sowie gleichzeitig eine radiale Auswölbung der Außenwand 8, bis diese an der Innenwand eines aufgesetzten Werkzeugs anliegt.

Die axiale Positionierung des Schafts in der Aufnahmebohrung 4 erfolgt über ein Anschlagstück 9, das ein Außengewinde 10 aufweist, welches mit einem Innengewinde 11 einer Führungsbuchse 22 in Eingriff steht, die in dem Futterkörper 1 koaxial zur Aufnahmebohrung 4 eingeschraubt ist. Das Anschlagstück 9 kann mittels eines Schneckenantriebs 12 verdreht und auf diese Weise verstellt werden. Der Schneckenantrieb 12 umfaßt eine quer zur Aufnahmebohrung 4 im Futterkörper 1 drehbar gelagerte Schnecke 13 und ein koaxial zur Aufnahme 4 angeordnetes und drehfest mit dem Anschlagstück 9 verbundenes Schneckenrad 14, das mit der Schnecke 13 kämmt.

Das Anschlagstück 9 durchgreift das Schneckenrad 14 und ist mit diesem so verbunden, daß es gegenüber dem Schnekkenrad 14 nicht verdreht, aber axial verschoben werden kann.

Zur Verstellung des Anschlagstücks 9 wird die Schnecke 13 durch ein geeignetes Werkzeug wie beispielsweise einen Steckschlüssel mit Außensechskant gedreht. Die Drehung der Schnecke 13 wird mit einer Untersetzung in eine Drehbewegung des Schneckenrads 14 und damit auch des Anschlagstücks 9 umgesetzt. Die Drehbewegung des Anschlagstücks 9 führt wiederum über den Eingriff von dessen Außengewinde 10 mit dem Innengewinde 11 der Führungsbuche 22 zu einer Axialbewegung des Anschlagstücks 9.

## Patentansprüche

1. Spannfutter, insbesondere Dehnspannfutter, mit einem formsteifen Futterkörper (1), in dem eine zentrale Aufnahme (4) für den Schaft eines zu spannenden Werkstücks oder Werkzeugs ausgebildet ist, und einem Spannmechanismus (6), um einen in die Aufnahme (4) eingeschobenen Schaft in der Aufnahme (4) zu fixieren, wobei zur axialen Positionierung des Schaftes in der Aufnahme (4) ein Anschlagstück (9) vorgesehen ist, das mittels einer Stelleinrichtung (12) axial verstellt werden kann, wobei die Stelleinrichtung (12) als Schneckentrieb mit einer quer zur Aufnahme (4) im Futterkörper (1) drehbar gelagerten Schnecke (13) und einem koaxial zur Aufnahme (4) angeordneten Schneckenrad (14) ausgebildet ist und das Anschlagstück (9) derart mit dem Schneckenrad (14) gekoppelt und in dem Futterkörper (1) gehalten ist, daß eine Drehbewegung des Schneckenrades (14) in eine Axialbewegung des Anschlagstücks (9) umgesetzt wird, **dadurch gekennzeichnet, daß** das Anschlagstück (9) das Schnekkenrad (14) durchgreift und in diesem drehfest aber axial verschiebbar gehalten ist, und das Anschlagstück (9) ein Außengewinde (10) aufweist, das mit einem Innengewinde (11) einer im Futterkörper (1) gehaltenen Führungsbuchse (22) in Eingriff steht.

2. Spannfutter nach Anspruch 1, **dadurch gekennzeichnet, daß** das Schneckenrad (14) in dem Futterkörper (1) zwischen der Führungsbuchse (22) in einer Schulter des Futterkörpers (1) axial positioniert ist.

3. Spannfutter nach einem der vorherigen Ansprüche, **dadurch gekennzeichnet, daß** die Schnecke (13) an ihrem nach außen gerichteten Ende Mittel (19) zur Verbindung mit einem Betätigungswerkzeug aufweist.

4. Spannfutter nach einem der vorherigen Ansprüche, **dadurch gekennzeichnet, daß** die Schnecke (13) mittels. einer im Futterkörper (1) vorgesehenen Lagerbuchse (16) axialfest und drehbar gelagert ist, wobei der Ringspalt zwischen Lagerbuchse (16) und Schnecke (13) vorzugsweise gegen den Austritt von Kühlmittel abgedichtet ist.

## Claims

1. A clamping chuck, in particular an expansion chuck, having a dimensionally stable chuck body (1) in which is embodied a central receptacle (4) for the shank of a workpiece or tool to be clamped, and having a clamping mechanism (6) for securing in the receptacle (4) a shank inserted into the receptacle (4), a stop element (9) that can be axially adjusted by means of an adjusting device (12) being provided for axial positioning of the shank in the receptacle (4), wherein the adjusting device (12) is configured as a worm gear drive having a worm (13) rotatably mounted transversely to the receptacle (4) in the chuck body (1) and a worm gear (14) arranged coaxially with the receptacle (4), the stop element (9) being coupled to the worm gear (14) and retained in the chuck body (1) in such a way that a rotary motion of the worm gear (14) is converted into an axial motion of the stop element (9), **characterized in that** the stop element (9) passes through the worm gear (14) and is retained therein nonrotatably but axially displaceably, and the stop element (9) has external threads (10) which are in engagement with internal threads (11) of a guide bushing (22) retained in the chuck body (1).

2. The clamping chuck as defined in Claim 1, **characterized in that** the worm gear (14) is axially positioned in the chuck body (1) between the guide bushing (22) and a shoulder of the chuck body (1).

3. The clamping chuck as defined in one of the foregoing claims, **characterized in that** the worm (13) has on its outwardly directed end means (19) for connection with an actuation tool.

4. The clamping chuck as defined in one of the foregoing claims, **characterized in that** the worm (13) is mounted rotatably and axially immovably by means of a bearing bushing (16) provided in the chuck body (1), the annular gap between bearing bushing (16) and worm (13) preferably being sealed to prevent the emergence of coolant.

## Revendications

1. Mandrin de serrage, en particulier un mandrin de serrage extensible, comportant un corps de mandrin (1) de forme rigide dans lequel est constitué un logement central (4) destiné à accueillir une tige d'une pièce à usiner ou d'un outil à serrer et un mécanisme de serrage (6) permettant de fixer dans le logement (4) une tige introduite dans ledit logement (4), étant donné que, pour le positionnement axial de la tige dans le logement (4), un élément de butée (9) pouvant être décalé axialement au moyen d'un mécanisme de réglage (12) est prévu, étant donné que le mécanisme de réglage (12) est conçu comme réducteur à vis sans fin comportant une vis sans fin (13) installée sur palier rotatif transversalement par rapport au logement (4) dans le corps de mandrin (1) et une roue tangente (14) disposée coaxialement par rapport au logement (4), et l'élément de butée (9) est couplé avec la roue tangente (14) et maintenu en place dans le corps de mandrin (1) de manière à ce que tout mouvement rotatif de la roue tangente (14) soit converti en mouvement axial de l'élément de butée (9), **caractérisé en ce que** l'élément de butée (9) prend à travers la roue tangente (14) et est maintenu dans cette dernière de manière résistante à la torsion, pouvant toutefois être décalé axialement, et l'élément de butée (9) présente un filet extérieur qui est en prise avec un filet intérieur (11) d'une douille de guidage (22) maintenue dans le corps de mandrin (1).

2. Mandrin de serrage selon la revendication 1, **caractérisé en ce que** la roue tangente (14) est positionnée axialement dans le corps de mandrin (1) entre la douille de guidage (22) et une épaule du corps de mandrin (1).

3. Mandrin de serrage selon l'une des revendications précédentes, **caractérisé en ce que** la vis sans fin (13) présente à son extrémité orientée vers l'extérieur des moyens (19) pour le raccordement avec un outil d'actionnement.

4. Mandrin de serrage selon l'une des revendications précédentes, **caractérisé en ce que** la vis sans fin (13) est installée sur palier rotatif, fixe dans le plan axial, étant donné que le passage annulaire entre le coussinet (16) et la vis sans fin (13) est de préférence étanche pour empêcher l'écoulement de réfrigérant.
